# DEMANDE DE BREVET EUROPEEN

(11) **EP 1 259 086 A1**
(43) Date de publication de la demande: **20.11.2002**
(21) Numéro de dépôt: 02076784.4
(22) Date de dépôt: 06.05.2002
(51) Int. Cl.: H04Q 7/32, H04Q 7/38

(54) **Reseau de telecommunications radiomobile**

(30) Priorité: 15.05.2001 FR 0106393
(71) Demandeur: Koninklijke Philips Electronics N.V., 5621 BA Eindhoven (NL)
(72) Inventeur: Coutant, Francois, c/o Int.Octrooibureau B.V., 5656 AA Eindhoven (NL)
(74) Mandataire: Chaffraix, Jean

(57) **Abrégé**

L'invention concerne le domaine des réseaux de télécommunications de type GSM. Un réseau de télécommunications comprend au moins un terminal, par exemple 105, pouvant basculer d'un mode de veille vers un mode dédié lors d'un établissement d'une communication et une pluralité de cellules, par exemple 101 et 102, sur lesquelles peut camper le terminal en mode de veille ou en mode dédié et contrôlées par des stations de base, par exemple 103, destinées à gérer un tel basculement lors d'un établissement d'une communication. Un but de l'invention est d'éviter à un terminal de camper en mode de veille sur une cellule sur laquelle il ne peut camper en mode dédié, en raison d'une défaillance de la station de base contrôlant cette cellule, au moment du basculement. Pour cela, le terminal comprend des moyens de détection 109 aptes à détecter une défaillance d'une station de base lors du basculement, des moyens d'identification 110 de la cellule contrôlée par une telle station de base défaillante, des moyens d'établissement 111 d'une liste noire de cellules contrôlées par des stations de base défaillantes et des moyens de sélection 112 d'une cellule pour un campement du terminal en mode de veille, un critère de sélection étant la présence ou non d'une cellule dans la liste noire.
L'invention présente un intérêt pour tous les réseaux mobiles, intérêt d'autant plus important que les installations du réseau sont anciennes, car le nombre de stations de base défaillantes peut alors être relativement important.

## Description

### DOMAINE TECHNIQUE

L'invention concerne un réseau de télécommunications comprenant
- au moins un terminal pouvant basculer d'un mode de veille vers un mode dédié lors d'un établissement d'une communication et
- une pluralité de cellules sur lesquelles peut camper ledit terminal en mode de veille ou en mode dédié et contrôlées par des stations de base destinées à gérer un tel basculement lors d'un établissement d'une communication.
Elle concerne également un terminal destiné à être utilisé dans un tel réseau de télécommunications.
Elle concerne en outre un procédé de traitement de données pour un tel terminal.
Elle concerne enfin un programme comprenant des instructions de code de programme pour l'exécution des étapes de ce procédé lorsque ledit programme est exécuté sur un processeur.
L'invention trouve son application, par exemple, dans un réseau de télécommunications de type GSM (GSM est l'abréviation de l'expression anglaise « Global System for Mobiles »).

### ETAT DE LA TECHNIQUE ANTERIEURE

Un réseau de télécommunications comprend généralement des terminaux et des stations de base qui fournissent des points d'entrées dans le réseau aux terminaux. Un tel réseau est divisé en cellules hexagonales, chaque cellule étant contrôlée par une station de base, les dimensions des côtés d'une telle cellule pouvant varier de quelques dizaines de mètres en milieu urbain à quelques kilomètres en milieu rural. Un terminal peut se trouver en mode de veille, lorsqu'il est allumé et qu'il n'est pas en communication. Une station de base envoie en permanence des signaux destinés à être reçus par les terminaux se situant dans la cellule qu'elle contrôle et dans des cellules voisines. Lorsqu'il se trouve en mode de veille, un terminal effectue des mesures de puissances des signaux envoyés par les stations de base les plus proches de lui, et campe sur la cellule contrôlée par la station de base qui émet les signaux engendrant la plus grande mesure de puissance, c'est à dire que c'est cette station de base qui lui permettra d'établir une communication avec un autre terminal. Lorsqu'un terminal a établi une communication avec un autre terminal, on dit qu'il se trouve en mode dédié. Le document publié par l'ETSI en février 1995 et intitulé « European digital cellular telecommunications system (Phase 2); Mobile radio interface layer 3 specification (GSM 04.08) » décrit des trames de données échangées entre un terminal et une station de base en mode de veille et en mode dédié, ainsi que divers protocoles permettant d'effectuer un basculement d'un mode de veille vers un mode dédié afin d'établir une communication. Les protocoles décrits ne permettent à un terminal de basculer vers un mode dédié que par l'intermédiaire de la station de base contrôlant la cellule sur laquelle il campe en mode de veille. Or, il est possible qu'une station de base soit défaillante, de sorte qu'il est possible pour un terminal de camper sur la cellule qu'elle contrôle en mode de veille, mais qu'il lui est impossible de basculer vers un mode dédié sur cette cellule. Dans cette situation, un utilisateur possédant un terminal campant en mode de veille sur une telle cellule pense pouvoir établir une communication avec un autre terminal, donc en particulier pouvoir être joint, alors que ce n'est pas le cas. Ceci est un inconvénient notable pour les utilisateurs, qui est d'autant plus marqué dans un réseau de télécommunications ancien dans lequel bon nombre de stations de base peuvent être défaillantes.

### EXPOSE DE L'INVENTION

Un but de l'invention est de proposer un réseau de télécommunications permettant à un terminal de ne pas camper en mode de veille sur une cellule sur laquelle il ne peut basculer vers un mode dédié.

Un réseau de télécommunications selon l'invention et tel que défini dans le paragraphe d'ouverture est caractérisé en ce que ledit terminal comprend :
- des moyens de détection aptes à détecter une défaillance d'une station de base lors dudit basculement ;
- des moyens d'identification de la cellule contrôlée par une telle station de base défaillante ;
- des moyens d'établissement d'une liste noire de cellules contrôlées par des stations de base défaillantes ;
- des moyens de sélection d'une cellule pour un campement dudit terminal en mode de veille, un critère de sélection étant une présence ou non de cette cellule dans la liste noire.

Conformément à l'invention, une liste noire de stations de base défaillantes est établie de la façon suivante. Lorsqu'un premier terminal campe en mode de veille sur une cellule et qu'il désire établir une communication avec un deuxième terminal, il est possible qu'il ne parvienne pas à basculer vers un mode dédié. De la même façon, lorsque le deuxième terminal tente d'établir une communication avec le premier, il est possible que ce dernier n'y parvienne pas. Ceci peut avoir plusieurs causes, par exemple une défaillance de la station de base qui contrôle cette cellule. Dans un tel cas, les moyens de détection détectent que la station de base en question est défaillante. Les moyens d'identification stockent des informations relatives à une identité de la cellule contrôlée par cette station de base défaillante, ces informations étant différentes pour toutes les cellules du monde, de sorte que, connaissant ces informations, il est impossible de confondre deux cellules. Les moyens d'établissement peuvent alors regrouper les informations stockées par les moyens d'identification pour créer une liste noire contenant les identités de toutes les cellules contrôlées par des stations de base défaillantes. Lorsqu'un terminal désire camper en mode de veille sur une cellule donnée, par exemple car la puissance des signaux reçus de la station de base contrôlant cette cellule est importante, l'identité de cette cellule permet de savoir si cette cellule se trouve ou non dans la liste noire. Si cette cellule se trouve dans la liste noire, les moyens de sélection peuvent alors décider de ne pas camper sur cette cellule. Ainsi, un terminal évite de camper en mode de veille sur une cellule sur laquelle il ne lui est pas possible d'être en mode dédié.

Dans un mode de réalisation particulièrement avantageux de l'invention, un terminal tel que décrit ci-dessus est caractérisé en ce qu'une cellule sort de ladite liste noire après une certaine durée prédéterminée suivant son entrée. Selon ce mode de réalisation, un terminal pourra essayer de basculer vers un mode dédié sur une cellule sortie de la liste noire. Or, pendant que cette cellule se trouvait dans la liste noire, il est possible qu'un opérateur ait réparé la station de base la contrôlant. Si tel est le cas, le terminal pourra de nouveau basculer vers un mode dédié sur cette cellule.

Dans une variante de l'invention, un terminal tel que décrit ci-dessus est caractérisé en ce que lesdits moyens d'établissement comprennent au moins un système de comptage par cellule apte à compter un nombre de défaillances de la station de base contrôlant cette cellule, une entrée de ladite cellule dans ladite liste noire s'effectuant après un nombre n prédéterminé et non nul de défaillances.
Ce mode de réalisation permet de ne placer une cellule dans la liste noire qu'après un certain nombre de défaillances de la station de base contrôlant cette cellule, afin de s'assurer que cette station de base est bien défaillante.

Dans un mode de réalisation avantageux de cette variante, un terminal tel que décrit ci-dessus est caractérisé en ce que :
- un système de comptage associé à une cellule présente dans la liste noire compte une défaillance à chaque fois que le terminal désire camper sur cette cellule en mode de veille et
- une cellule sort de ladite liste noire lorsque le système de comptage associé à ladite cellule indique un nombre m prédéterminé de défaillances strictement supérieur à n.
Selon ce mode de réalisation, il est possible de faire sortir une cellule de la liste noire au bout d'une durée éventuellement inférieure à celle réglée dans le mode de réalisation particulièrement avantageux de l'invention. Le mode de réalisation avantageux de cette variante présente notamment un avantage dans une zone géographique où une densité de cellules est relativement faible, par exemple en milieu rural. Si l'on suppose qu'un utilisateur d'un terminal habite en milieu rural et quitte tous les matins son habitation pour aller travailler à plusieurs kilomètres. Lorsqu'il allume son terminal le matin, le terminal mesure alors une forte puissance des signaux émis par la station de base la plus proche, et une puissance faible des signaux émis par les stations de base voisines, qui se situent à des distances relativement élevées. Le terminal désire alors camper sur la cellule la plus proche. Si cette cellule se trouve dans la liste noire, le système de comptage associé à cette cellule compte une défaillance. Un schéma identique se reproduit lorsque l'utilisateur rentre de son travail le soir. Par conséquent le système de comptage compte une dizaine de défaillances en une semaine. Or, la cellule la plus proche se trouvant dans la liste noire, le terminal campe en mode dédié sur des cellules relativement lointaines, ce qui engendre des qualités de communication relativement mauvaises. Il est donc avantageux que la cellule sorte de la liste noire relativement fréquemment, afin que le terminal puisse tester si la station de base contrôlant cette cellule a été réparée. Dans l'exemple ci-dessus, si la valeur m est fixée à 20, la cellule en question sortira de la liste noire deux semaines environ après son entrée.

Dans un autre mode de réalisation de cette variante, un terminal tel que décrit ci-dessus est caractérisé en ce qu'il comprend des moyens de réinitialisation d'un système de comptage, une telle réinitialisation s'effectuant soit lors d'un basculement réussi par la station de base contrôlant la cellule associée audit système de comptage, soit lors d'une sortie de cette cellule de la liste noire. Selon ce mode de réalisation, une cellule n'entre pas dans la liste noire quand la station de base la contrôlant n'est pas défaillante. En effet, il est possible qu'un basculement d'un mode de veille vers un mode dédié échoue pour des raisons extérieures à la station de base, par exemple le passage du terminal sous un tunnel au moment de ce basculement. Si l'on suppose que n vaut, par exemple, deux, le terminal a la possibilité d'essayer une deuxième fois de basculer vers un mode dédié sur cette cellule. Si la station de base n'est pas défaillante, il est fort probable que ce basculement n'échoue pas une deuxième fois, auquel cas le système de comptage associé à cette cellule est réinitialisé. Ainsi, si un basculement échoue à nouveau pour des raisons extérieures à la station de base, la cellule contrôlée par cette station de base n'entrera pas dans la liste noire.

Dans la mesure où les étapes décrites ci-dessus peuvent être effectuées par un logiciel, l'invention prévoit également un programme comprenant des instructions de code de programme pour l'exécution des étapes du procédé décrit ci-dessus lorsque ledit programme est exécuté sur un processeur.

### BREVE DESCRIPTION DES FIGURES

L'invention sera mieux comprise et d'autres détails apparaîtront dans la description qui va suivre en regard des dessins annexés qui sont donnés à titre d'exemples non limitatifs et dans lesquels :
- les figures 1a et 1b illustrent des caractéristiques de l'invention ;
- les figures 2a et 2b illustrent des structures de trames de données échangées entre un terminal et une station de base ;
- la figure 3 est un organigramme qui illustre une détection d'une défaillance d'une station de base lors d'un basculement d'un mode de veille vers un mode dédié ;
- la figure 4 est un organigramme qui illustre une entrée d'une cellule dans une liste noire ;
- les figures 5a et 5b sont deux organigrammes qui illustrent deux modes de sortie d'une liste noire ;
- la figure 6 est un organigramme qui illustre un exemple de sélection d'une cellule pour un campement en mode de veille et une gestion d'une liste noire.

### EXPOSE DETAILLE D'AU MOINS UN MODE DE REALISATION DE L'INVENTION

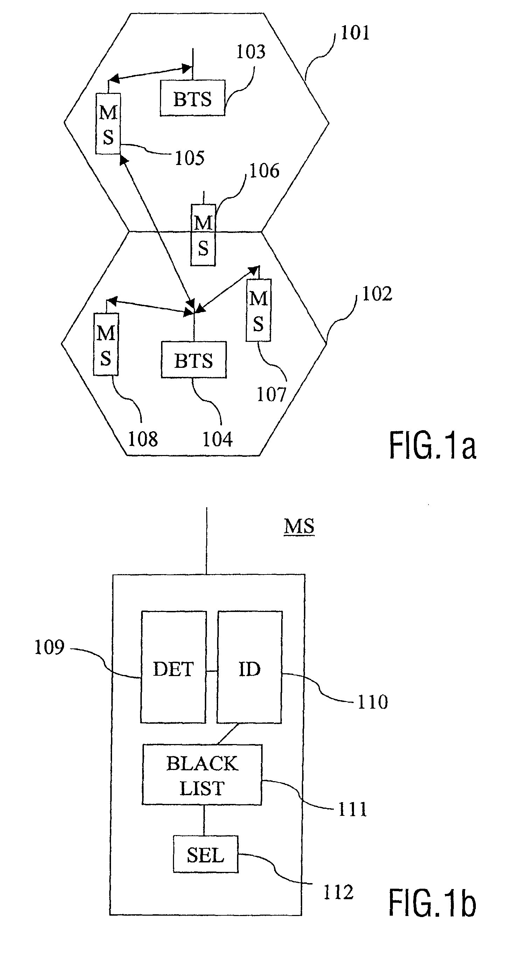

La figure 1a illustre un réseau de télécommunications selon l'invention. Un tel réseau de télécommunications comprend au moins une première cellule 101, une deuxième cellule 102, une première station de base 103, une deuxième station de base 104, un premier terminal 105, un deuxième terminal 106, un troisième terminal 107 et un quatrième terminal 108. D'autres éléments, non représentés sur la figure mais connus de l'homme du métier, par exemple dans le cas d'un réseau GSM, sont également nécessaires dans un tel réseau.

Dans l'exemple représenté sur la figure 1a, le premier terminal 105 échange, lorsqu'il est en mode de veille, des signaux avec la première station de base 103 et avec la deuxième station de base 104. Il mesure des puissances de signaux reçus de ces deux stations de base afin de déterminer sur quelle cellule il campe en mode de veille. De telles mesures sont nécessaires notamment lorsque le premier terminal 105 se déplace de la première cellule 101 vers la deuxième cellule 102. Dans le cas du réseau GSM, le premier terminal 105 mesure généralement, à intervalles réguliers, les puissances des signaux reçus de la part des trente deux stations de base les plus proches. Parmi ces trente deux stations de base, celles correspondant aux six puissances les plus grandes constituent une liste de voisines proches, les autres constituent une liste de voisines lointaines. Le premier terminal 105 stocke des informations relatives aux cellules présentes dans ces deux listes dans une mémoire non volatile. L'ensemble de ces deux listes constitue une liste de voisines. La description effectuée ci dessus s'applique à tous les terminaux présents dans le réseau de télécommunications, notamment au deuxième terminal 106, au troisième terminal 107 et au quatrième terminal 108. De tels terminaux selon l'invention possèdent en outre des fonctionnalités, décrites sur la figure 1b.

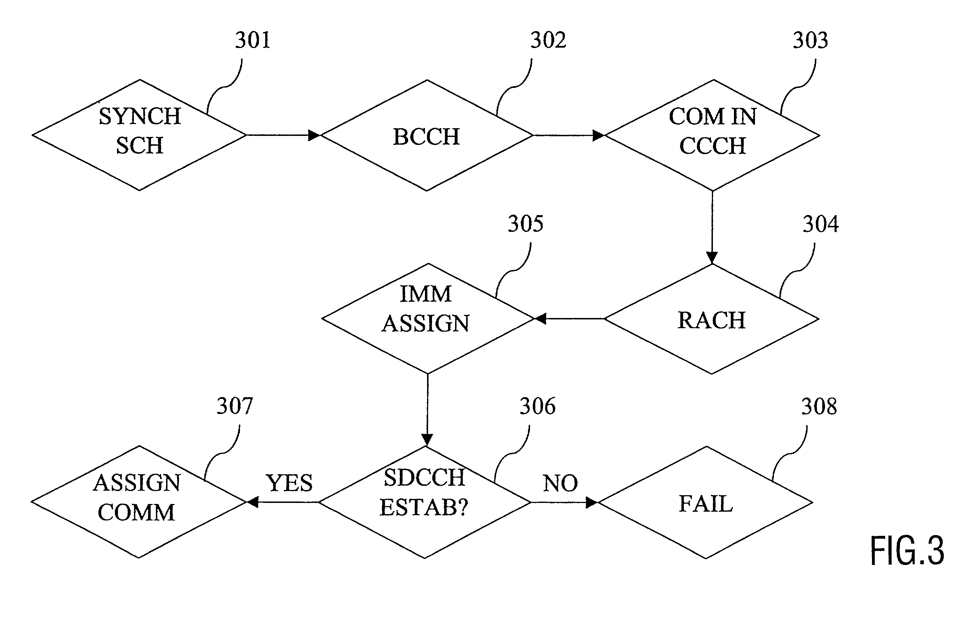

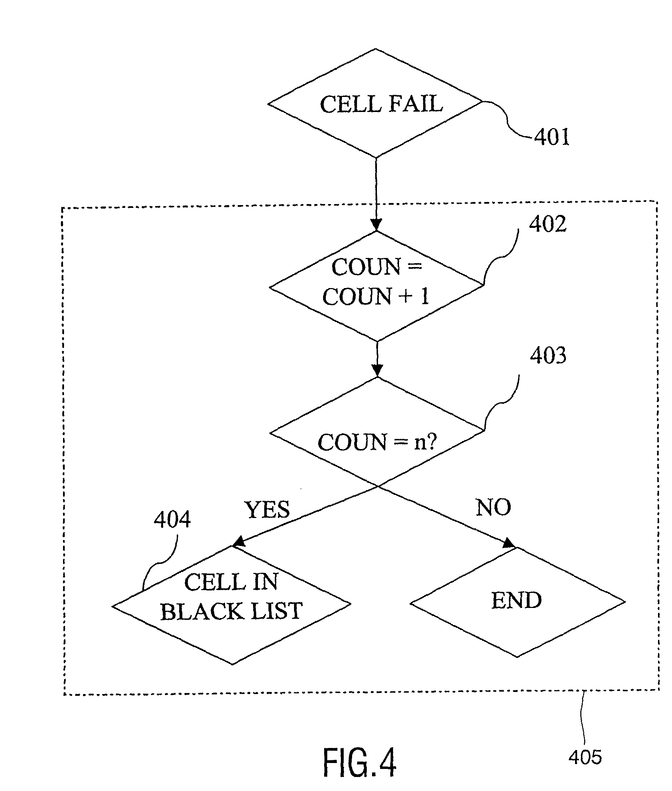

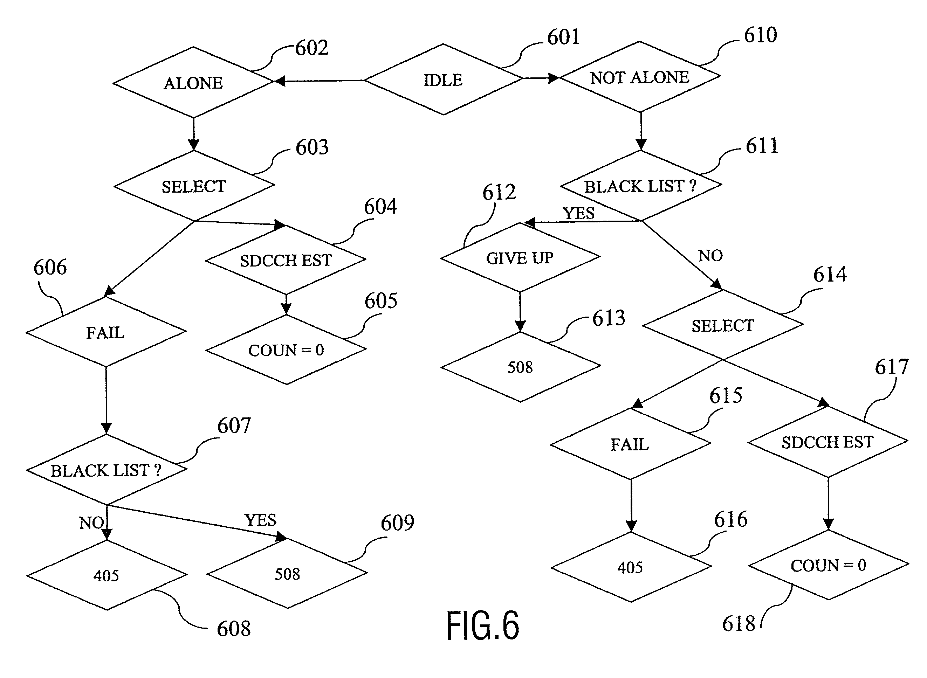

La figure 1b illustre un terminal selon l'invention. Un tel terminal comprend des moyens de détection 109, des moyens d'identification 110, des moyens d'établissement d'une liste noire 111 et des moyens de sélection 112. Les moyens de détection 109 permettent de détecter une défaillance d'une station de base lors d'un basculement d'un mode de veille vers un mode dédié. Leur fonctionnement sera détaillé sur la figure 3. Lorsqu'une telle défaillance est détectée par les moyens de détection 109, les moyens d'identification 110 stockent, dans une mémoire non volatile, des informations relatives à la cellule contrôlée par cette station de base défaillante. Ces informations sont :
- un code de localisation de région LAC ;
- un code de réseau mobile MNC ;
- un code de pays MCC ;
- une identité de cellule CI.
Les moyens d'établissement d'une liste noire 111 établissent, notamment grâce à ces informations, une liste noire de cellules contrôlées par des stations de base défaillantes. Leur fonctionnement sera précisé sur les figures 4 à 6.
Le fonctionnement des moyens de sélection 112 sera précisé sur la figure 6.

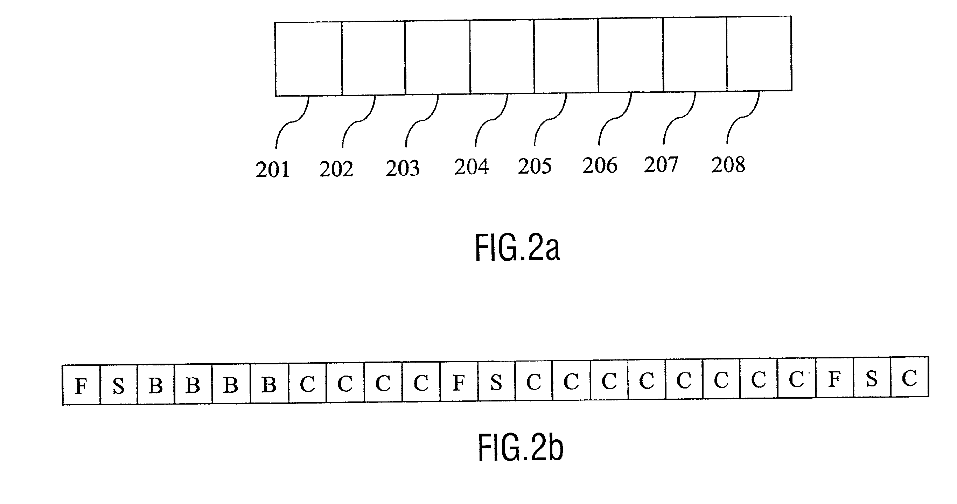

La figure 2a représente une trame d'accès multiple temporelle TDMA. Une telle trame comprend une voie balise 201, un créneau de signalisation 202 et six créneaux de trafic numérotés de 203 à 208. Une telle trame TDMA est un élément essentielle d'un réseau de télécommunications de type GSM 900 pour lequel la fréquence de signaux envoyés d'un terminal vers une station de base est comprise entre 890 et 915 mégahertz et la fréquence des signaux envoyés d'une station de base vers un terminal est comprise entre 935 et 960 mégahertz. Dans un tel réseau, des bandes de fréquences de 25 mégahertz sont divisées en 124 fréquences porteuses espacées de 200 kilohertz. Chacune de ces fréquences est ensuite divisée en créneaux temporels d'une durée de 0,576 microsecondes, un ensemble de huit créneaux temporels consécutifs formant une trame d'accès multiple temporelle TDMA. Des canaux logiques résultent de répétitions périodiques de créneaux temporels. La voie balise 201 est le créneau temporel utilisé pour une communication entre un terminal et une station de base lorsque le terminal est en mode de veille. Le créneau de signalisation 202 est utilisé notamment pour permettre le basculement d'un mode de veille vers un mode dédié. Un des six créneaux de trafic numérotés de 203 à 208 est utilisé lorsque le terminal se trouve en mode dédié, notamment pour un transport de la voix d'un utilisateur d'un tel terminal. La trame TDMA représentée sur la figure 2a correspond à deux fréquences porteuses, par exemple la fréquence 890,2 mégahertz du terminal vers la station de base et la fréquence 935.2 mégahertz de la station de base vers le terminal. Ainsi, six terminaux différents pourront utiliser les mêmes fréquences pour camper simultanément sur une même cellule en mode dédié, en utilisant chacun un des six créneaux de trafic numérotés de 203 à 208.

La figure 2b représente une succession de canaux logiques sur la voie balise 201, d'une station de base vers un terminal. Chaque élément de cette succession , représenté par un carré, est un créneau temporel. Les créneaux temporels représentés ici sont en fait séparés d'une durée de 4,615 millisecondes, c'est à dire la durée d'une trame TDMA ; une répétition de créneaux temporels d'un même type forme un canal logique. Les différents canaux logiques représentés ici sont les suivants :
- F : canal de calage FCCH d'un terminal sur une fréquence porteuse ;
- S : canal de synchronisation SCH d'un terminal avec une station de base ;
- B : canal de diffusion BCCH des informations d'une station de base ;
- C : canal de contrôle commun CCCH.
Le canal de diffusion BCCH est utilisé par une station de base pour transmettre à un ensemble de terminaux des informations relatives à la cellule contrôlée par cette station de base, tels le code de localisation de région LAC, le code de réseau mobile MNC, le code de pays MCC et l'identité de cellule CI. Le canal de contrôle commun CCCH est notamment utilisé par une station de base pour informer un terminal qu'un autre terminal cherche à établir une communication avec lui et pour lui transmette des informations relatives à un canal qu'il doit utiliser pour établir cette communication.
La voie balise 201 d'un terminal vers une station de base comprend essentiellement un canal d'accès aléatoire RACH par lequel le terminal accède au réseau de façon aléatoire pour établir une communication.

La figure 3 illustre une détection d'une défaillance d'une station de base lors d'un basculement d'un mode de veille vers un mode dédié. A la case 301, un terminal se synchronise avec la station de base sur laquelle il campe en mode de veille. Il utilise pour cela des informations contenues dans le canal FCCH et dans le canal SCH. A la case 302, le terminal stocke des informations relatives à une identité de la cellule contrôlant cette station de base. A la case 303, une information contenue dans le canal CCCH indique au terminal qu'un autre terminal essaye de le joindre. A la case 304, le terminal demande alors qu'un canal dédié de signalisation SDCCH lui soit alloué pour établir cette communication. Un tel établissement de communication nécessite un échange de protocole, qui s'effectue sur un canal SDCCH du créneau de signalisation 202. Le créneau de signalisation 202 comprend généralement huit canaux SDCCH. A la case 305, la station de base indique au terminal lequel des huit canaux SDCCH il doit utiliser pour effectuer l'échange de protocole. Or, au niveau d'une station de base, différentes cartes électroniques gèrent les différents créneaux temporels des trames TDMA. Ainsi, il est probable que la carte électronique gérant la voie balise 201 fonctionne, alors que la carte électronique gérant le créneau de signalisation 202 soit défaillante. Dans une telle situation, le terminal pourra camper en mode de veille sur la cellule contrôlée par cette station de base, mais ne pourra pas basculer vers un mode dédié sur cette cellule. A la case 306, le terminal tente d'échanger le protocole sur le canal SDCCH qui lui a été alloué. S'il y parvient, c'est à dire si la carte électronique gérant le créneau de signalisation 202 fonctionne, la station de base lui envoie un signal de commande à la case 307 pour lui indiquer un canal de trafic TCH sur lequel le terminal doit établir la communication, chaque créneau de trafic comprenant un canal de trafic TCH. S'il n'y parvient pas, c'est à dire si la carte électronique gérant le créneau de signalisation 202 ne fonctionne pas, une défaillance de la station de base est détectée à la case 308.
Il arrive que le réseau soit « saturé », c'est à dire que tous les canaux de trafic d'une station de base sont simultanément utilisés. Dans ce cas, il n'est pas possible d'établir une communication, c'est à dire de basculer vers un mode dédié sur la cellule contrôlée par cette station de base, bien que cette station de base fonctionne parfaitement. Cependant, dans une telle situation, le terminal ne détectera pas de défaillance de la station de base. En effet, les canaux SDCCH de la station de base sont rarement tous utilisés simultanément, ce qui implique que, même dans le cas d'un réseau saturé, la case 307 sera atteinte.

La figure 4 illustre une entrée d'une cellule dans la liste noire. A la case 401, une défaillance d'une station de base contrôlant une cellule est détectée par les moyens de détection 109. Un système de comptage associé à cette cellule compte une défaillance à la case 402. A la case 403, le terminal vérifie si ce système de comptage indique alors un nombre de défaillances égal ou non à un nombre n réglable par un constructeur d'un tel terminal. Par exemple, n peut avoir la valeur deux. Si le système de comptage indique un nombre de défaillances égal au nombre n, la cellule entre dans la liste noire, à la case 404, c'est à dire que les informations relatives à l'identité de cette cellule sont stockées dans la liste noire. Si le système de comptage indique un nombre de défaillances inférieur à n, rien ne se passe après la case 403. Les cases 402 à 404 forment un algorithme d'entrée dans une liste noire 405.

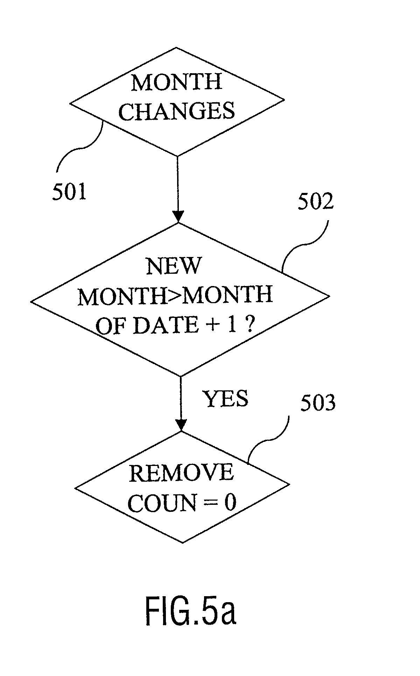

La figure 5a illustre un mode de sortie d'une liste noire. Lorsqu'une cellule entre dans la liste noire, le terminal stocke une date d'entrée de cette cellule dans la liste noire. Lorsqu'un changement de mois survient à la case 501, le terminal vérifie à la case 502, pour chaque cellule présente dans la liste noire, si un nombre correspondant au nouveau mois est strictement supérieur au nombre correspondant au mois d'entrée de la cellule dans la liste noire, augmenté d'une unité. Si c'est le cas, la cellule sort de la liste noire à la case 503 et le système de comptage associé à cette cellule est réinitialisé grâce à des moyens de réinitialisation. Sinon, la cellule reste dans la liste noire. Ceci permet à une cellule de sortir de la liste noire au plus tôt un mois après son entrée, au plus tard deux mois après son entrée.

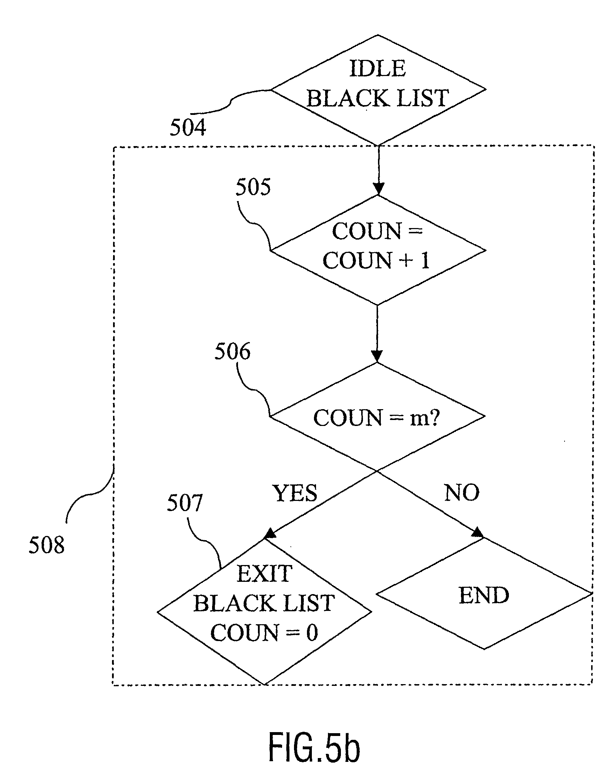

La figure 5b illustre un autre mode de sortie de la liste noire. A la case 504, le terminal désire camper en mode de veille sur une cellule présente dans la liste noire. Le système de comptage associé à cette cellule compte une défaillance à la case 505. A la case 506, le terminal vérifie si ce système de comptage indique alors un nombre de défaillances égal ou non à un nombre m réglable par un constructeur d'un tel terminal. Par exemple, m peut avoir la valeur vingt. Si le système de comptage indique alors un nombre de défaillances égal au nombre m, la cellule sort de la liste noire à la case 507 et le système de comptage est alors réinitialisé grâce à des moyens de réinitialisation. Si le système de comptage indique alors un nombre de défaillances inférieur au nombre m, rien ne se passe après la case 506. Les cases 505 à 507 forment un algorithme de sortie d'une liste noire 508.

La figure 6 illustre une sélection d'une cellule pour un campement en mode de veille et une gestion de la liste noire. A la case 601, le terminal désire camper sur une cellule en mode de veille. Le terminal vérifie si cette cellule est la seule présente dans sa liste de voisines. En effet, si la cellule est seule dans la liste de voisines, le terminal campe sur cette cellule en mode de veille, indépendamment du fait qu'elle se trouve ou non dans la liste noire, puisque dans une telle situation le terminal n'a pas d'autres choix de cellule possible pour un campement en mode de veille.
A la case 602, la cellule est seule dans la liste de voisines. Le terminal décide alors à la case 603 de camper sur cette cellule en mode de veille. Le terminal désire alors basculer vers un mode dédié sur cette cellule. A la case 604, un tel basculement est effectué. Le système de comptage associé à cette cellule est alors réinitialisé à la case 605. A la case 606, le basculement échoue à cause d'une défaillance de la station de base contrôlant cette cellule. Le terminal vérifie alors à la case 607 si cette cellule est présente dans la liste noire. Si elle n'est pas présente dans la liste noire, le terminal initie alors à la case 608 l'algorithme d'entrée dans une liste noire 405. Si elle est présente dans la liste noire, le terminal initie alors à la case 608 l'algorithme de sortie d'une liste noire 508.
A la case 610, la cellule n'est pas seule dans la liste de voisines. Le terminal vérifie alors à la case 611 si cette cellule est présente dans la liste noire. Si elle est présente dans la liste noire, le terminal décide à la case 612 de ne pas camper sur cette cellule et initie à la case 613 l'algorithme de sortie d'une liste noire 508. En outre, si cette cellule se trouve dans la liste de cellules voisines proches, le terminal la place dans la liste de cellules voisines lointaines afin de permettre à une cellule de la liste de cellules voisines lointaines d'entrer dans la liste de cellules voisines proches. Si la cellule n'est pas présente dans la liste noire, le terminal décide à la case 614 de camper sur cette cellule en mode de veille. Le terminal désire alors basculer vers un mode dédié sur cette cellule. A la case 615, le basculement échoue à cause d'une défaillance de la station de base contrôlant cette cellule. Le terminal initie alors à la case 616 l'algorithme d'entrée dans une liste noire 405. A la case 617, un tel basculement est effectué. Le système de comptage associé à cette cellule est alors réinitialisé à la case 618.

La description ci-dessus en référence aux figures illustre l'invention plutôt qu'elle ne la limite. A cet égard, quelques remarques sont faites ci-dessous.

La description des figures s'appuie sur l'exemple d'un réseau de télécommunications de type GSM. Bien entendu, l'invention s'applique à d'autres types de réseau, éventuellement plus évolués que le réseau de type GSM, dès lors que ces réseaux comprennent des terminaux pouvant basculer d'un mode de veille vers un mode dédié, lesdits terminaux échangeant des données avec un relais afin d'effectuer ce basculement.

Sur la figure 5a, un mode de sortie d'une liste noire est décrit. Il est possible de décliner ce mode, sans s'éloigner de l'esprit de l'invention. Par exemple, le terminal pourra stocker le jour et le mois d'entrée d'une cellule dans la liste noire et faire sortir cette cellule de la liste après une certaine durée suivant son entrée, par exemple deux mois.

En principe, il est possible d'implémenter le procédé selon l'invention au moyen d'un circuit intégré convenablement programmé. Un jeu d'instructions contenu dans une mémoire de programmation peut ordonner au circuit intégré d'effectuer les différentes étapes décrites précédemment. Le jeu d'instructions peut être chargé dans la mémoire de programmation par la lecture d'un support de données comme, par exemple, un disque sur lequel est codé le jeu d'instructions. La lecture peut s'effectuer par l'intermédiaire d'un réseau de communication comme, par exemple, l'Internet. Dans ce cas, un fournisseur de service mettra le jeu d'instructions à la disposition des intéressés.

## Revendications

1. Réseau de télécommunications comprenant
- au moins un terminal pouvant basculer d'un mode de veille vers un mode dédié lors d'un établissement d'une communication et
- une pluralité de cellules sur lesquelles peut camper ledit terminal en mode de veille ou en mode dédié et contrôlées par des stations de base destinées à gérer un tel basculement lors d'un établissement d'une communication,
**caractérisé en ce que** ledit terminal comprend :
- des moyens de détection aptes à détecter une défaillance d'une station de base lors dudit basculement ;
- des moyens d'identification de la cellule contrôlée par une telle station de base défaillante ;
- des moyens d'établissement d'une liste noire de cellules contrôlées par des stations de base défaillantes ;
- des moyens de sélection d'une cellule pour un campement dudit terminal en mode de veille, un critère de sélection étant une présence ou non de cette cellule dans la liste noire.

2. Terminal pouvant basculer d'un mode de veille vers un mode dédié lors d'un établissement d'une communication, **caractérisé en ce qu'**il comprend :
- des moyens de détection aptes à détecter une défaillance d'une station de base lors dudit basculement ;
- des moyens d'identification de la cellule contrôlée par une telle station de base défaillante ;
- des moyens d'établissement d'une liste noire de cellules contrôlées par des stations de base défaillantes ;
- des moyens de sélection d'une cellule pour un campement dudit terminal en mode de veille, un critère de sélection étant une présence ou non de cette cellule dans la liste noire.

3. Terminal selon la revendication 2, **caractérisé en ce qu'**une cellule sort de ladite liste noire après une certaine durée prédéterminée suivant son entrée.

4. Terminal selon la revendication 2, **caractérisé en ce que** lesdits moyens d'établissement comprennent au moins un système de comptage par cellule apte à compter un nombre de défaillances de la station de base contrôlant cette cellule, une entrée de ladite cellule dans ladite liste noire s'effectuant après un nombre n prédéterminé et non nul de défaillances.

5. Terminal selon la revendication 4, **caractérisé en ce que**
- un système de comptage associé à une cellule présente dans la liste noire compte une défaillance à chaque fois que le terminal désire camper sur cette cellule en mode de veille et
- une cellule sort de ladite liste noire lorsque le système de comptage associé à ladite cellule indique un nombre m prédéterminé de défaillances strictement supérieur à n.

6. Terminal selon la revendication 4, **caractérisé en ce qu'**il comprend des moyens de réinitialisation d'un système de comptage, une telle réinitialisation s'effectuant soit lors d'un basculement réussi par la station de base contrôlant la cellule associée audit système de comptage, soit lors d'une sortie de cette cellule de la liste noire.

7. Procédé de traitement de données pour un terminal pouvant basculer d'un mode de veille vers un mode dédié lors d'un établissement d'une communication, **caractérisé en ce qu'**il comprend :
- une étape de détection pour détecter une défaillance d'une station de base lors dudit basculement ;
- une étape d'identification de la cellule contrôlée par une telle station de base défaillante ;
- une étape d'établissement d'une liste noire de cellules contrôlées par des stations de base défaillantes ;
- une étape de sélection d'une cellule pour un campement dudit terminal en mode de veille, un critère de sélection étant une présence ou non de cette cellule dans la liste noire.

8. Procédé de traitement de données selon la revendication 7, **caractérisé en ce qu'**une cellule sort de ladite liste noire après une certaine durée prédéterminée suivant son entrée.

9. Procédé de traitement de données selon la revendication 7, **caractérisé en ce que** ladite étape d'établissement est réalisée grâce à au moins un système de comptage par cellule apte à compter un nombre de défaillances de la station de base contrôlant cette cellule, une entrée de ladite cellule dans ladite liste noire s'effectuant après un nombre n prédéterminé et non nul de défaillances.

10. Procédé de traitement de données selon la revendication 9, **caractérisé en ce que** :
- un système de comptage associé à une cellule présente dans la liste noire compte une défaillance à chaque fois que le terminal désire camper sur cette cellule en mode de veille et
- une cellule sort de ladite liste noire lorsque le système de comptage associé à ladite cellule indique un nombre m prédéterminé de défaillances strictement supérieur à n.

11. Procédé de traitement de données selon la revendication 9, **caractérisé en ce qu'**il comprend une étape de réinitialisation d'un système de comptage, une telle réinitialisation s'effectuant soit lors d'un basculement réussi par la station de base contrôlant la cellule associée audit système de comptage, soit lors d'une sortie de cette cellule de la liste noire.

12. Programme comprenant des instructions de code de programme pour l'exécution des étapes du procédé selon la revendication 7 lorsque ledit programme est exécuté sur un processeur.
